# EUROPÄISCHE PATENTSCHRIFT

(11) **EP 2 098 718 B1**
(45) Veröffentlichungstag und Bekanntmachung des Hinweises auf die Patenterteilung: **15.05.2013**
(21) Anmeldenummer: 09154286.0
(22) Anmeldetag: 04.03.2009
(51) Int. Cl.: F02M 21/02, F02M 37/22, B01D 35/00, B01D 39/20

(54) **Filtereinheit zur Einbringung in die Kraftstoffzufuhrleitung eines Autogas-Verbrennungsmotors**
Filter unit for insertion in the fuel supply conduit of a liquefied gas combustion engine
Unité de filtre destinée à l'introduction dans la conduite d'alimentation en carburant d'un moteur à combustion de gaz automobile

(30) Priorität: 07.03.2008 DE 102008013014; 07.04.2008 DE 102008017547
(43) Veröffentlichungstag der Anmeldung: 09.09.2009
(73) Patentinhaber: Autogastechnik Triptis GmbH, 07819 Triptis (DE)
(72) Erfinder: Fellmann, Günter, 07819 Triptis (DE)
(74) Vertreter: Kruspig, Volkmar

(56) Entgegenhaltungen:
- WO-A1-03/031022
- WO-A1-03/086568
- WO-A1-2007/128356
- DE-U1-202007 007 232
- US-A1- 2002 170 280

## Beschreibung

Die Erfindung betrifft eine Filtereinheit zur Einbringung in die Kraftstoffzufuhrleitung eines Autogas-Verbrennungsmotors, gemäß Patentanspruch 1.

Eine steigende Anzahl von Kraftfahrzeugen wird mit Autogas betrieben. Besitzer von Kraftfahrzeugen nutzen gehäuft die Möglichkeit ihre mit Ottomotoren ausgestatteten Fahrzeuge auf Autogas-Betrieb umzurüsten. Hierbei kann zwischen mehreren Anlagetypen gewählt werden, die einen derartigen Betrieb ermöglichen. Venturianlagen wandeln das im Tank unter Druck befindliche flüssige Autogas über Verdampfer und Druckregler in den gasförmigen Zustand um. In dieser Phase wird dem Motor das Autogas zugeführt. Im Gegensatz hierzu fördern LPI-Anlagen das Autogas über eine Ringleitung und Dosierventile in flüssiger Form in den Ansaugtrakt des Motors.

Autogas besteht in der Regel aus Propan, Butan und deren Gemischen.

Verunreinigungen wie Sulfate und Ammoniakverbindungen und anorganische Bestandteile des Autogases (Butene, Butadiene, Propen, Propadien und weitere ungesättigte Kohlenwasserstoffe) führen unter Druck- und Temperatureinflüssen bei der Vergasung in der Autogasanlage u. a. zu Salz- und Kristallbildungen in den beweglichen Teilen der Gasanlage.

Durch Butene, Butadiene, Propen, Propadien und weitere ungesättigte Kohlenwasserstoffe werden langkettige Kohlenwasserstoffe gebildet, welche in kaltem Zustand einen festen Aggregatzustand annehmen und folglich die Membranen und Düsen der Gasanlage verstopfen.

Zudem ist das Lösen der Füllstoffe aus Verbindungsschläuchen aufgrund der im Kraftstoff befindlichen ungesättigten Kohlenwasserstoff (wie z. B. Lösemittel, Ester) ein bekanntes Problem. Dies führt ebenfalls zum Verstopfen von Teilen der Gasanlage.

Aus den oben genannten Gründen, sollten die Verunreinigungen und die störenden natürlichen Bestandteile der Kraftstoffgemische aus diesen herausgefiltert werden, um einen behinderungsfreien und wartungsarmen Betrieb eines mit Flüssiggas betriebenen Kraftfahrzeugs zu gewährleisten.

Wie bereits bei Diesel und Benzin betriebenen Kraftfahrzeugen bekannt ist, muss zum Herausfiltern von festen Partikeln aus dem Kraftstoff, ein Kraftstofffilter in die Saugleitung zum Motor eingebracht werden.

Herkömmliche Filtereinrichtungen für mit Flüssiggas betriebene Kraftfahrzeuge bestehen aus einem metallischen Druckgehäuse mit Papiereinsatz. Derartige Papierfiltereinrichtungen müssen jedoch regelmäßig erneuert werden, da Papierfilter entweder prinzipiell nicht gereinigt werden können oder nur im begrenztem Maße. Dies hat eine erhöhte Umweltbelastung zur Folge.

Die DE 10 2007 007 232 U1 offenbart eine Filterbaugruppe, welche zwei konzentrisch angeordnete Filtersiebe mit unterschiedlichen Durchmessern aufweist. In den durch die Anordnung der Filtersiebe entstehenden Zwischenraum sind Elemente gefüllt, welche die Filterung des Kraftstoffs bezwecken. Die Filtersiebe sind von keinem Gehäuse umschlossen. Dieses wird vielmehr durch die beispielhafte Einbringung der Filterbaugruppe in ein Rohr gebildet. Das Filter muss daher mit dementsprechender Kraft und Passgenauigkeit in das jeweilige Rohr eingebracht werden, um einen dauerhaften Halt im Rohr zu gewährleisten. Diese Konstruktion ist jedoch nachteilig anzusehen, sobald das Filter gewechselt bzw. gereinigt werden muss. In diesen Fällen ist das Filter wieder mit dementsprechender Kraft aus dem Rohr zu entfernen. Außerdem können sich durch die Nutzung des Fahrzeugs Ablagerungen an den Stirnseiten des Filters gebildet haben, sodass ein Entfernen desselbigen zusätzlich erschwert wird.

Aus der WO 03/086568 A1 ist eine Filtereinheit zur Einbringung in die Kraftstoffzufuhrleitung eines Verbrennungsmotors bekannt, welche ein Filtergehäuse mit oberen und unterem Gehäuseteil zeigt. Beide Teile sind miteinander verbindbar ausgeführt, so dass eine verschließbare Öffnung entsteht, durch welche das vierte Element eingebracht und entnommen werden kann.

Die Verwendung von katalytisch wirkenden Materialien ist aus der WO 03/086568 A1 vorbeschrieben.

Die Beimischung eines Additivs zum Kraftstoff zum Zweck der Reduktion des Schwefelgehaltes bei Dieselkraftstoffen zeigt die US 2002/170280 A1.

Aus dem Vorgenannten ist es daher Aufgabe der Erfindung, eine weiterentwickelte Filtereinheit anzugeben, die es zum einen ermöglicht, einen Filtereinsatz schnell entfernen und auswechseln zu können und zum anderen den Filtereinsatz aus Materialien zu erstellen, die gereinigt und wiederverwendet werden können, wobei die Filtereinheit derartig ausgebildet sein soll, dass eine Verwendung in mit Flüssiggas betriebenen Kraftfahrzeugen gewährleistet werden kann.

Die Lösung der Aufgabe der Erfindung erfolgt mit einer Filtereinheit zur Einbringung in die Kraftstoffzufuhrleitung eines Verbrennungsmotors, gemäß der Merkmalskombination nach Anspruch 1, wobei die Unteransprüche zweckmäßige Ausgestaltungen und Weiterbildungen darstellen.

Erfindungsgemäß sieht die Filtereinheit zur Einbringung in die Kraftstoffzufuhrleitung eines Verbrennungsmotors ein Filtergehäuse vor, in welches durch eine vorgesehene Öffnung ein Filtereinsatz eingebracht und entnommen werden kann. Die Öffnung kann beispielhaft als Schraubverschluss ausgebildet sein. Es ist auch denkbar, dass die Öffnung mit einer einfach zu konstruierenden Klappe mittels Schrauben verschlossen werden kann.

Die Öffnung des Filtergehäuses kann sich wahlweise am oberen oder unteren stirnseitigen Ende des vorzugsweise zylindrisch geformten Filtergehäuses befinden. Ein leichter Ein- und Ausbau des Filtereinsatzes ist somit jederzeit gewährleistet, da die Filtergehäuseöffnung den konstruktiven Gegebenheiten des aufzurüstenden Fahrzeugs angepasst werden kann.

Zweckmäßigerweise ist der Filtereinsatz mit katalytisch wirkenden Elementen versehen. D. h. die Filterung des Autogases wird durch das Einbringen zusätzlicher Elemente in den Filtereinsatz beschleunigt und die Filterung des Autogases ist bereits bei üblichen Betriebstemperaturen möglich, ohne dass bei diesem Vorgang das zusätzlich eingebrachte katalytische Element verbraucht wird.

Erfindungsgemäß besteht der Filtereinsatz aus gesinterten Buntmetallelementen. Testreihen haben ergeben, dass auch Metalle und Legierungsgemische besonders gut geeignet sind, Autogas von Verunreinigungen zu befreien.

Diese gesinterten Buntmetallelemente sind gesinterte Metallkugeln aus Kupfer/Zinn-Bronze, welche eine rohrförmige Geometrie bilden.

Zudem ist auch bei der Verwendung von gesinterten Buntmetallelementen der Einsatz von katalytischen Elementen im Filtereinsatz zweckmäßig.

Im Falle der Verwendung von gesinterten Metallkugeln aus Kupfer/ZinnBronze eignet sich eine Vernickelung der Kugeln als katalytisch wirkendes Element.

Die dargelegte Filtereinheit wird, wie bereits erwähnt, in mit Flüssiggasbrennstoff betriebenen Kraftfahrzeugen verwendet und hat den Vorteil, dass der Filtereinsatz problemlos ausgewechselt und gereinigt werden kann. Folglich muss bei entsprechender Verschmutzung/Abnutzung des Filtereinsatzes nicht die vollständige Filtereinheit entsorgt und erneuert werden, sondern nur die gesinterten Buntmetallelemente dem Filtergehäuse entnommen und gereinigt werden. Ist der Filtereinsatz derart abgenutzt, dass eine Reinigung die Wirksamkeit des Filtereinsatzes nicht mehr erhöht, muss dieser gegebenenfalls erneuert werden. Dies ist weitaus günstiger, als die vollständige Filtereinheit zu erneuern.

Die Erfindung soll anhand zweier Ausführungsbeispiele sowie unter Zuhilfenahme von Figuren näher erläutert werden.

Hierbei zeigen:
- Fig. 1: eine beispielhafte Darstellung des Filtergehäuses;
- Fig. 2: eine Schnittdarstellung der gesamten Filtereinheit mit nicht erfindungsgemäßem keramischen Material als Filtereinsatz und
- Fig. 3: eine Schnittdarstellung der gesamten Filtereinheit mit gesinterten Buntmetallelementen als Filtereinsatz.

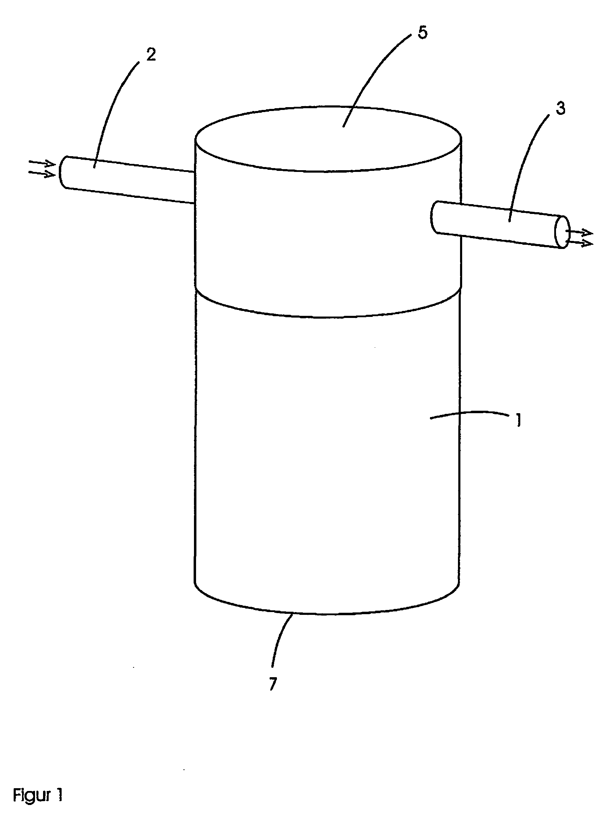

Die Filtereinheit (Fig. 1) gemäß eines Ausführungsbeispiels besteht zunächst aus einem Filtergehäuse (1) welches zwischen zwei Rohren eingebaut ist. Das zu filternde Gas strömt dabei durch ein Eingangsverbindungsrohr (2), wird durch den im Filtergehäuse (1) befindlichen Filtereinsatz gefiltert und kann am oberen Ende des Filtergehäuses durch das Verbindungsausgangsrohr (3) entweichen.

Die Bewegungsrichtung des Gases ist mit der Pfeildarstellung symbolisiert.

Das Filtergehäuse weist einen Gehäusedeckel (5) auf, welcher mittels eines Schraubverschlusses (6) an dem Filtergehäuse (1) angebracht werden kann. Im Gegensatz hierzu ist der Boden des Filtergehäuses (7) dauerhaft an das Filtergehäuse angebracht. Zudem ist es denkbar, dass der Gehäusedeckel (5) aus einer einfachen Klappenkonstruktion besteht, die mittels Schrauben mit dem Filtergehäuse (1) verbunden werden kann.

Die Filtereinheit kann hierbei in den unterschiedlichsten Positionen in der Gasanlage eingebracht werden, da die Filtereinheit konstruktionsbedingt sowohl entspanntes Autogas und Flüssiggas reinigen kann.

Bei Gasanlagen (z. B. Venturianlagen), welche ein Verfahren zur Umwandlung des flüssigen Autogases in den gasförmigen Zustand umfassen, ist es zweckmäßig die Filtereinheit zwischen den Verdampfer und den Eingangsdüsen zu platzieren.

Bei der Bereitstellung einer LPI-Anlage kann das Filter beispielsweise nach dem Gasregler eingebaut werden.

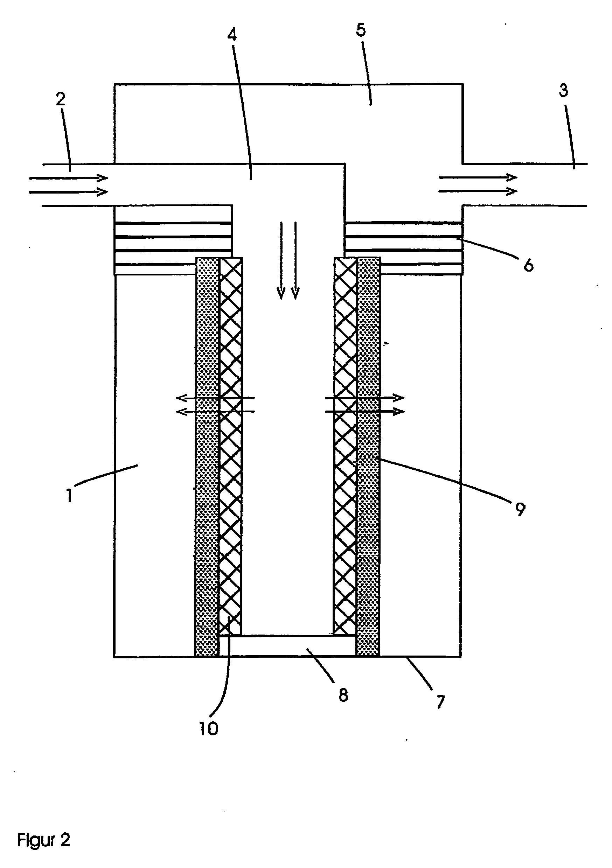

Fig. 2 zeigt eine Filtereinheit, welche als Filtereinsatz ein (nicht erfindungsgemäßes) keramisches rohrförmiges Material (9) aufweist. Dieses ist zentriert und abgedichtet in das Filtergehäuse eingebracht, wobei zur Zentrierung des Rohrstücks eine Zentrierhilfe (8) am Gehäuseboden (7) angebracht ist. Zur Abdichtung gegenüber dem Einlass im Gehäusedeckel (5) dient ein Verbindungsstück (4), welches das einströmende Gas direkt in Richtung des rohrförmigen Keramikmaterials (9) leitet. Das rohrförmige Keramikmaterial (9) besteht zweckmäßigerweise aus Aluminiumoxid und umschließt konzentrisch ein Metallgewebe oder -netz (10). Das metallische Gewebe oder Netz (10) wird zusammen mit dem Keramikmaterial (9) über den Gehäusedeckel (5) in das Filtergehäuse (1) gegeben.

Das metallische Gewebe oder Netz erfüllt zweckmäßigerweise zugleich die Funktion eines katalytisch wirkenden Elements, wodurch der Vorgang der Filterung beschleunigt wird, ohne dass das katalytische Element verbraucht wird.

Im Falle der Verwendung eines Keramikmaterials (9) eignet sich ein Kupfer/Nickel-Gewebe besonders als katalytisch wirkendes Element. Folglich wird das Metallgewebe oder -netz aus Kupfer/Nickel-Drähten gefertigt, wobei der Drahtdurchmesser 0,24 - 0,32 mm ist und Maschenweiten von 0,35 - 0,72 mm geformt werden. Zudem verhindert das Metallgewebe oder -netz, dass grobe keramische Bestandteile des Filtereinsatzes Motor- oder Gasanlagenteile beschädigen können.

Zusätzlich sind im keramischen Material Beimischungen eingebracht, die z. B. aus den Bestandteilen Titanoxid, Siliciumcarbid und Aluminiumoxid bestehen können. Diese beigemischten Elemente weisen dabei eine Körnung von unter 10 Mikrometern auf und verhindern den bereits erwähnten Verschleiß von Ventilen und Ventilsitzen, indem sie mit dem gefilterten Gas zu den Ventilen und Ventilsitzen transportiert werden.

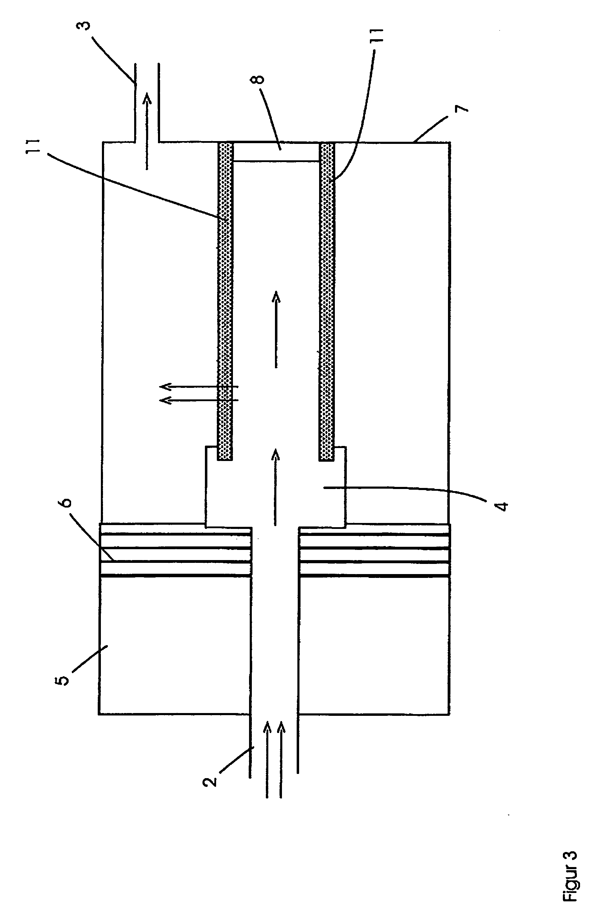

Fig. 3 zeigt eine erfindungsgemäße Ausführungsform der Filtereinheit. In dem gezeigten Filtergehäuse (1) werden gesinterte Buntmetallelemente (11) als Filtereinsatz verwendet. Die gesinterten Buntmetallelemente (11) sind zentriert und abgedichtet in das Filtergehäuse (1) eingebracht. Das hierbei verwendete Filtergehäuse (1) zeigt eine weitere Ausführungsform eines Gehäuses (1). Am Gehäusedeckel (5) befindet sich in diesem Fall nur das Eingangsverbindungsrohr (2), durch welches das zu filternde Gas in das Filtergehäuse (1) gelangt.

Die gesinterten Buntmetallelemente (11), welche zweckmäßigerweise Sintermetallkugeln aus Kupfer/Zinn-Bronze sind, werden von keinem Metallgewebe oder -netz umgeben und bilden eine rohrförmige Geometrie.

Das einströmende Gas strömt durch die gesinterten Buntmetallelemente in das umgebende Filtergehäuse, um dann durch das Ausgangsverbindungsrohr (3), welches in den Gehäuseboden (7) integriert ist, Richtung Motor oder Gasanlage zu strömen.

Das katalytische Element wird in diesem Ausführungsbeispiel durch Vernickelung der gesinterten Buntmetallelemente (11) gebildet und erzielt folglich die gleiche Wirkung wie das keramische Material (9) in Verbindung mit dem Metallgewebe oder -netz (10).

### Bezugszeichenliste

- 1: Filtergehäuse
- 2: Eingangsverbindungsrohr
- 3: Ausgangsverbindungsrohr
- 4: Verbindungsstück
- 5: Gehäusedeckel
- 6: Schraubverschluss
- 7: Gehäuseboden
- 8: Zentrierhilfe
- 9: Rohrförmiges Keramikmaterial
- 10: Metallgewebe oder -netz
- 11: Gesinterte Buntmetallelemente

## Patentansprüche

1. Filtereinheit zur Einbringung in die Kraftstoffzufuhrleitung eines Autogas-Verbrennungsmotors, wobei
die Filtereinheit aus einem Filtergehäuse und einem vom Gehäuse aufgenommenen Filtereinsatz besteht und der Filtereinsatz über eine am Filtergehäuse vorgesehene verschließbare Öffnung in das Filtergehäuse eingebracht und entnommen werden kann,
**dadurch gekennzeichnet, dass**
der Filtereinsatz aus Buntmetallelementen in Form von gesinterten Metallkugeln aus Kupfer/Zinn-Bronze besteht, wobei die gesinterten Metallkugeln aus Kupfer/Zinn-Bronze vernickelt sind.

2. Filtereinheit nach Anspruch 1,
**dadurch gekennzeichnet, dass**
die gesinterten Buntmetallelemente eine rohrförmige Geometrie bilden, wobei das einströmende Gas durch die gesinterten Buntmetallelemente hindurchströmt.

3. Filtereinheit nach Anspruch 1 oder 2,
**dadurch gekennzeichnet, dass**
die Vernickelung der gesinterten Buntmetallelemente katalytisch wirkt.

## Claims

1. A filter unit for insertion in the fuel supply conduit of a liquefied gas combustion engine,
wherein the filter unit includes a filter housing and a filter insert received by the housing and the filter insert is introducible into and removable from the filter housing through a closable opening provided at the filter housing,
wherein the filter insert includes nonferrous metals configured as sintered metal spheres made from copper/zinc-bronze,
wherein the sintered metal spheres made from copper/zinc-bronze are nickel plated.

2. The filter unit according to claim 1,
wherein the sintered nonferrous metal elements form a tubular geometry,
wherein the inflowing gas flows through the sintered nonferrous metal elements.

3. The filter unit according to claim 1 or 2, wherein the nickel plating of the sintered nonferrous metal elements provides a catalytic effect.

## Revendications

1. Unité de filtre à introduire dans la conduite d'alimentation en carburant d'un moteur à combustion de gaz automobile, dans laquelle l'unité de filtre est composée d'un boîtier de filtre et d'un insert de filtre reçu par le boîtier, et l'insert de filtre peut être introduit et enlevé dans le boîtier de filtre via une ouverture refermable prévue sur le boîtier de filtre,
**caractérisée en ce que**
l'insert de filtre est composé d'éléments en métal non-ferreux sous la forme de billes de métal fritté en bronze cuivre/zinc, lesdites billes de métal fritté en bronze cuivre/zinc étant nickelées.

2. Unité de filtre selon la revendication 1,
**caractérisée en ce que** les éléments en métal non-ferreux forment une géométrie à forme tubulaire, tel que le gaz entrant traverse les éléments en métal non-ferreux fritté.

3. Unité de filtre selon la revendication 1 ou 2,
**caractérisée en ce que** le nickelage des éléments en métal non-ferreux fritté a un effet catalytique.
